# EUROPEAN PATENT APPLICATION

(11) **EP 3 181 609 A1**
(43) Date of publication of application: **21.06.2017**
(21) Application number: 16156128.7
(22) Date of filing: 17.02.2016
(51) Int. Cl.: C08G 59/50, C09D 163/00

(54) **A SUPPORT FOR END WINDINGS OF AN ELECTRIC MACHINE**

(30) Priority: 18.12.2015 EP 15200983
(71) Applicant: General Electric Technology GmbH, 5400 Baden (CH)
(72) Inventor: Widmer, Thomas, 5400 Baden (CH); Visintin, Massimiliano, 5400 Baden (CH); Cattaneo, Luigi, 20099 Sesto San Giovanni (MI) (IT); Merati, Erminio, 20099 Sesto San Giovanni (MI) (IT)
(74) Representative: General Electric Technology GmbH

(57) **Abstract**

The invention discloses an epoxy resin formulation comprising the following compounds, at least an epoxy resin of the type of bisphenol A or F, at least a hardener of type diamine, e.g. polyoxypropylendiam or polyoxypropylenetriamine, and at least an inorganic filler. Further disclosed is a support to surround endwindings of a stator of an electric machine, with the support made from an epoxy resin formulation and the use of an epoxy resin as support. Further disclosed is a method to fabricate an epoxy resin formulation with the steps of mixing with a temperature between 15°C and 35°C at least an epoxy resin of the type of bisphenol A or F, at least a hardener of type diamine, e.g. polyoxypropylendiam or polyoxypropylenetriamine, and at least an inorganic filler, casting the epoxy resin formulation with a temperature between 15°C and 35°C, and postcuring the epoxy resin formulation for several hours with a temperature between 60°C and 100°C.

## Description

### TECHNICAL FIELD

The present disclosure relates to an epoxy resin formulation, a support to surround an end winding of a stator or a rotor of an electric machine made from such an epoxy resin formulation, to a method to fabricate an epoxy resin formulation, and to the use of an epoxy resin formulation as a support for an end winding of a stator or rotor of an electric machine.

The electric machine is a synchronous generator to be connected to a gas or steam turbine, commonly referred to as turbogenerator. In particular the concerned turbogenerator is a short circuit generator to provide high power for a very limited time in laboratory tests.

### BACKGROUND

Short circuit generators are electric machines which operate generally in qualified laboratories to provide the necessary power during qualification tests of components like insulators, switchgears, terminal boxes, etc. The endwindings of a stator of the electric machine are heavily stressed by the huge electromagnetic force induced during the short circuit. The endwindings are the parts of the electric winding or coils which are not housed in the slots of the stator but lying outside. Due to the forces in short circuit generators the endwindings must be held in position with specific fixing means. These fixing means are sometimes designed as supports made from a resin which enclose and mechanically hold the endwindings. The endwindings are embedded in the support. These supports are named resin baskets in the art. The supports have the further function to avoid heavy partial discharges during high voltage acceptance tests. Thus, such supports also serve as insulators. The supports have generally a weight of 2 tons and a diameter of 2 meter for a specific application. With long term operation and wide ambient temperature ranges down to -20°C to -30°C, a problem with the support material may arise. In the material cracks occur which weaken the structure and can induce damages to the generators leading to failures.

### SUMMARY

It is an object of the invention to enhance the reliability of a support for an end winding of a stator of an electric machine. It is a further object of the invention to provide a material with a high mechanical and electrical reliability. This object is solved with the features of a support to surround endwindings, the use of a support, a method to fabricate an epoxy resin formulation according to the independent claims, and an epoxy resin formulation.

Further examples of the invention are described in the dependent claims.

### BRIEF DESCRIPTION OF THE DRAWINGS

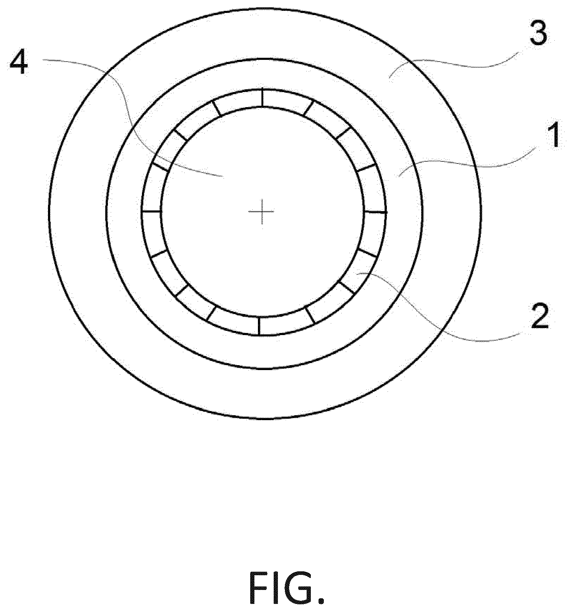

Further characteristics and advantages will be more apparent from the description of a preferred but non-exclusive embodiment of the epoxy resin formulation and the support to surround an end winding of a stator of an electric machine, illustrated by way of non-limiting example in the accompanying drawing, in which:
Fig. shows a schematic front view of a stator core with endwindings embedded by a support according to the invention.

### DETAILED DESCRIPTION OF EXEMPLARY EMBODIMENTS

With reference to the figure, this shows for sake of understanding the position of a support 1 around the endwindings 2 within a stator core 3 of a short circuit generator.

Fig. shows a schematic front view into a stator core 3 or core 3 of a short circuit generator. Shown is the axis of the bore and a stator bore 4 of such a short circuit generator. These kinds of generators are used in laboratory environments for testing components. A corresponding rotor commonly placed inside the stator core 3 is not shown here. Endwindings 2 are schematically illustrated around the stator bore 4. The endwindings 2 are end parts of the windings around the stator core 3 to induce a voltage to the short circuit generator. The main part of the windings is housed inside slots of the stator core 3, the endwindings 2 are in common turbogenerators freely suspended outside the slots. In an example of the invention the endwindings 2 are embedded in a support 1 which is arranged between the endwindings 2 and the stator core 3. The support 1 has a cylindrical shape similar to the stator core 3 and is concentric to the stator axis, the diameter is generally in the range of 2 meters. The support 1 is also referred to as basket and has a weight of 2 tons in this example. The support 1 is made from an epoxy resin formulation which comprises the compounds of at least an epoxy resin of the type of bisphenol A or F, at least a hardener of type diamine, e.g. polyoxypropylendiam or polyoxypropylenetriamine, and at least an inorganic filler, in an example silica, in a further example aluminium oxide. Further, the inorganic filler in the epoxy resin formulation has different particle sizes. In a further example the inorganic filler has an amount of the epoxy resin formulation between 40 and 80 parts per weight. In an example the support 1 comprises at least one catalyst. The epoxy resin formulation is fabricated with common methods. Moreover, a specific mixing and casting process contains the steps of mixing the compounds with a temperature between 15°C and 35°C, casting the material with a temperature between 15°C and 35°C, and postcuring the material for several hours, e.g. four to six hours, with a temperature between 60°C and 100°C. The support 1 is reinforced with several layers of glass fabric embedded into the support 1 itself. The glass fabric embedded into the support 1 creates an additional mechanical stability and reduces the internal stresses due to the different thermal expansion coefficients of the various components within the endwinding basket. Some glass fabric layers can be properly shaped and arranged in a form of a pipe network, ensuring an improved resin flow during the impregnation process down to any remote place of the endwinding basket volume which needs to be properly filled in. With this aim it is generally envisaged to perform the resin casting after vacuum has been established in the whole endwinding basket.

The invention furthermore covers the disclosed material as such, the epoxy resin formulation comprising the compounds of at least an epoxy resin of the type of bisphenol A or F, at least a hardener of type diamine, e.g. polyoxypropylendiam or polyoxypropylenetriamine, and at least an inorganic filler. The specific examples and the fabrication method of the epoxy resin formulation are the same as described above. The epoxy resin formulation can be used in a variety of industrial applications in which high mechanical and/or electrical requirements dominate together with large ambient temperature variations, like bushings, capacitors, electric transformers, electric generators and motors with compact stator endwinding designs.

While the invention has been described in detail with reference to exemplary embodiments thereof, it will be apparent to one skilled in the art that various changes can be made, and equivalents employed, without departing from the scope of the invention. The foregoing description of the preferred embodiments of the invention has been presented for purposes of illustration and description. It is not intended to be exhaustive or to limit the invention to the precise form disclosed, and modifications and variations are possible in light of the above teachings or may be acquired from practice of the invention. The embodiments were chosen and described in order to explain the principles of the invention and its practical application to enable one skilled in the art to utilize the invention in various embodiments as are suited to the particular use contemplated. It is intended that the scope of the invention be defined by the claims appended hereto, and their equivalents.

### REFERENCE NUMBERS

- 1: support
- 2: endwindings
- 3: stator core or core
- 4: stator bore

## Claims

1. An epoxy resin formulation comprising the following compounds, at least an epoxy resin of the type of bisphenol A or F, at least a hardener of type diamine, and at least an inorganic filler.

2. The epoxy resin formulation according to claim 1, **characterized in that** the type diamine is polyoxypropylendiamine or polyoxypropylenetriamine.

3. The epoxy resin formulation according to claim 1, **characterized in that** the epoxy resin formulation comprises at least one catalyst.

4. The epoxy resin formulation according to claim 1, **characterized in that** the at least an inorganic filler is silica.

5. The epoxy resin formulation according to claim 1, **characterized in that** the at least an inorganic filler is aluminium oxide.

6. The epoxy resin formulation according to claim 1, **characterized in that** the at least an inorganic filler has different particle sizes.

7. The epoxy resin formulation according to claim 1, **characterized in that** the at least an inorganic filler has an amount of the epoxy resin formulation between 40 and 80 parts per weight.

8. A support (1) to surround endwindings (2) of a stator of an electric machine, with the support (1) made from an epoxy resin formulation according to claim 1.

9. The support (1) according to claim 8, **characterized in that** the support (1) is shaped cylindrically and concentric to the stator axis.

10. The support (1) according to claim 8, **characterized in that** a glass mate is connected to the support (1) to reinforce the support (1).

11. Use of an epoxy resin formulation according to claim 1 as a support for stator or rotor endwindings (2) in electric machines, in bushings, in capacitors and transformers.

12. Method to fabricate an epoxy resin formulation with the steps of mixing with a temperature between 15°C and 35°C at least an epoxy resin of the type of bisphenol A or F, at least a hardener of polyoxypropylendiam, and at least an inorganic filler, casting the epoxy resin formulation with a temperature between 15°C and 35°C, and postcuring the epoxy resin formulation for several hours with a temperature between 60°C and 100°C.
